(19) Europäisches Patentamt / European Patent Office / Office européen des brevets

(11) **EP 3 004 851 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **14730454.7**

(22) Anmeldetag: **27.05.2014**

(51) Int Cl.:
**G01N 21/958** (2006.01)

(86) Internationale Anmeldenummer:
**PCT/EP2014/060933**

(87) Internationale Veröffentlichungsnummer:
**WO 2014/191401 (04.12.2014 Gazette 2014/49)**

(54) **VERFAHREN ZUR BESTIMMUNG DER BRECHKRAFT EINES TRANSPARENTEN OBJEKTS SOWIE ENTSPRECHENDE VORRICHTUNG**

METHOD FOR DETERMINING THE REFRACTIVE POWER OF A TRANSPARENT OBJECT, AND CORRESPONDING DEVICE

PROCÉDÉ DE DÉTERMINATION DE LA PUISSANCE DE RÉFRACTION D'UN OBJET TRANSPARENT ET DISPOSITIF CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2013 DE 102013105570**

(43) Veröffentlichungstag der Anmeldung:
**13.04.2016 Patentblatt 2016/15**

(73) Patentinhaber: **Isra Surface Vision GmbH**
**45699 Herten (DE)**

(72) Erfinder: **WEIGT, Paul**
**44869 Bochum (DE)**

(74) Vertreter: **Keil & Schaafhausen Patentanwälte PartGmbB**
**Friedrichstraße 2-6**
**60323 Frankfurt am Main (DE)**

(56) Entgegenhaltungen:
EP-A1- 0 416 302      DE-A1- 2 310 763
DE-A1- 3 600 199      DE-C1- 19 643 017
US-A1- 2011 187 855

**Beschreibung**

Die vorliegende Erfindung betrifft ein Verfahren zur Bestimmung der Brechkraft eines transparenten Objekts, z.B. einer Windschutzscheibe, einer Sehhilfe, einer Kanzelverglasung, einer Helmverglasung oder dergl., sowie eine entsprechende Vorrichtung.

Die in der Windschutzscheibe (WSS) maximal zulässigen Brechkräfte sind in gesetzlichen Vorschriften wie der ECE-R 43 oder der EU-Richtlinie2001/92/EG festgeschrieben und müssen von den Herstellern der Scheiben bzw. der entsprechenden Fahrzeuge eingehalten werden.

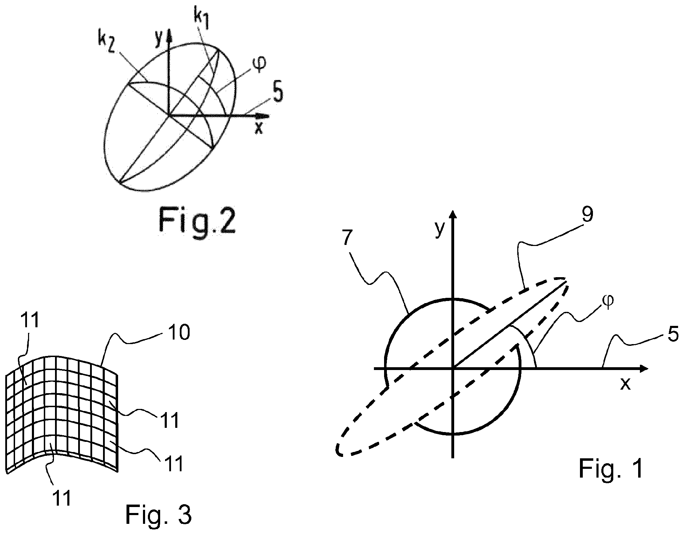

Um die Brechkraft derartiger Scheiben zu messen, ist ein Verfahren bekannt, bei dem ein Raster mit einer Vielzahl von in festen Abständen von z.B. 24 mm angeordneten Kreisscheiben mit einem Durchmesser von z.B. 8 mm durch eine Windschutzscheibe auf einen Schirm projiziert wird. Bei diesem Verfahren ist die Größe der Verformung der projizierten hellen Kreisscheiben ein Maß für die in der Scheibe vorliegende räumliche Verteilung der Brechkräfte. Bei der Projektion durch eine Scheibe mit einer nicht sphärischen Linse (allgemeiner Fall) wird jede Kreisscheibe des Rasters zu einer um einen Winkel φ verdrehten Ellipse verzerrt. Mit anderen Worten wird die Kreisscheibe in eine Richtung z.B. gestaucht und in die andere Richtung gelängt. Die Verformung der Kreisscheibe 7 zu einer Ellipse 9 ist in Fig. 1 dargestellt. Bei sphärischen Linsen werden die Kreisscheiben vergrößert oder verkleinert.

Mit dem bekannten Kreisrasterverfahren können also durch Messung der Ellipsenachsen oder des Kreisdurchmessers die Extremwerte der Brechkräfte in den für die Projektion der Kreisscheiben ausgewählten Punkten der Windschutzscheibe direkt bestimmt werden. Die Lage der nicht sphärischen Linse ist durch den ebenfalls messbaren Winkel φ gegeben. Das Linsenkoordinatensystem ist um den Winkel φ zum Mess-Koordinatensystem gedreht.

Das bekannte Verfahren hat jedoch den Nachteil, dass, wie oben angegeben, die Kreisscheiben einen bestimmten, vorgegebenen Abstand voneinander aufweisen, d.h. es müssen, um die gesamte Windschutzscheibe zu vermessen, mehrere Messungen bei relativ zur Windschutzscheibe verschobenem Raster durchgeführt werden. Hierbei versuchen Prüfpersonen händisch die Position der Kreisscheibe derart festzulegen, dass diese die Bereiche mit den Extremwerten der Brechkräfte erfassen. Anschließend wird unter Zuhilfenahme einer Schablone auf dem Schirm ermittelt, ob die Brechkraft der Windschutzscheibe in den entsprechenden Punkten der Windschutzscheibe von den Vorschriften abweicht oder nicht. Dies ist ein sehr aufwändiges Verfahren mit einer hohen Fehleranfälligkeit.

Das Dokument US 2011/187855 A1 beschäftigt sich mit einer Bestimmung der Lage von Defekten und deren Ausdehnung. Auf der Grundlage einer Phasenverschiebung können basierend auf einer Kalibrierung Verzerrungskoeffizienten oder eine Brechkraft bestimmt werden, welche für den jeweiligen Defekt repräsentativ sind.

Die Aufgabe der vorliegenden Erfindung besteht demgegenüber darin, ein Verfahren anzugeben, das auf einfache Weise die Bestimmung der Brechkraft eines transparenten Objekts automatisiert und mit einer geringen Fehleranfälligkeit ermöglicht. Die Aufgabe besteht ferner darin, eine entsprechende Vorrichtung für die Durchführung eines derartigen Verfahrens zu schaffen.

Die obige Aufgabe wird gelöst durch ein Verfahren mit den Merkmalen des Anspruchs 1.

Erfindungsgemäß wird mittels einer Kamera an mindestens einer vorbestimmten Stelle des Objekts (z.B. einer Windschutzscheibe) eine erste Abbildung eines ersten Linienrasters durch das Objekt erfasst und mittels einer Recheneinheit anschließend anhand der ersten Abbildung an der mindestens einen vorbestimmten Stelle des Objekts der Linienabstand der ersten Abbildung und/oder die Drehung der Linien bezogen auf das erste Linienraster bestimmt und hieraus die Brechkraft an der mindestens einen vorbestimmten Stelle des Objekts ermittelt. Insbesondere beinhaltet die Bestimmung der Brechkraft an der mindestens einen vorbestimmten Stelle (in dem entsprechenden Volumenelement) des Objekts die Bestimmung der Brechkraft in jeder azimutalen Richtung dieser Stelle einschließlich der Extremwerte der Brechkraft. Besonders bevorzugt wird erfindungsgemäß der Linienabstand der ersten Abbildung quer zu den Linien des ersten Linienrasters bestimmt und hieraus unter Berücksichtigung der Drehung der Linien die Brechkraft an der mindestens einen vorbestimmten Stelle des Objekts ermittelt.

Hierbei wird vorzugsweise so vorgegangen, dass die erste Abbildung eines z.B. linien- oder streifenförmigen Linienrasters durch einen linien- oder streifenförmigen Bereich des Objekts, d.h. durch eine Vielzahl von auf einer Linie oder in einem Streifen angeordneten Stellen des Objekts, gleichzeitig erzeugt wird. Um die Brechkraft an jeder Stelle des gesamten Objekts zu erfassen, werden die Bilder des Linienrasters durch alle nebeneinander liegenden Linien oder Streifenbereiche des Objekts nacheinander erzeugt.

Im Rahmen der vorliegenden Erfindung ist mit einer Stelle des Objekts ein Volumenelement des Objekts gemeint, das eine bestimmte Brechkraft aufweist. Ein Volumenelement eines vorzugsweise scheibenförmigen Objekts, das entsprechend eine in eine Raumrichtung (in Richtung der Scheibendicke) vergleichsweise geringe Ausdehnung aufweist, erstreckt sich von der Vorderseite bis zur Rückseite des Objekts und nimmt die gesamte Dicke des Objekts ein. Das ganze Objekt setzt sich aus einer Vielzahl von Volumenelementen zusammen, deren Verhalten, wie nachfolgend gezeigt werden soll, mit dem Modell einer Linse angenähert wird.

Die Erfindung geht davon aus, dass die Krümmung einer beliebig geformten Linse durch ihre Hauptkrümmungen $k_1$, $k_2$ an jedem Punkt der Linse durch die Achsen einer Ellipse und die azimutale Lage der Achsen bezogen auf ein feststehendes, zweidimensionales Mess-Koordinatensystem 5 (Koordinaten x,y) durch den Winkel $\varphi$ beschrieben werden kann (siehe Fig. 2). Die Brechkraft (Brechwert) einer solchen Linse mit ihren Oberflächenkrümmungen $k_1$, $k_2$ kann z.B. durch folgende Formel, welche für bikonvexe Linsen gilt, angenähert werden:

$$\frac{1}{f} = (n-1)\cdot\left[\frac{1}{r_1} + \frac{1}{r_2}\right] = (n-1)\cdot\left[k_1 + k_2\right] \qquad (1),$$

dabei ist f die Brennweite der Linse, n die Brechzahl und die Variablen $r_1$, $r_2$ bezeichnen die Krümmungsradien der Linsenoberflächen. Die Brechkraft ist 1/f und die Krümmung 1/r. Wird für eine sphärische Linse $k_1 = k_2 = k$ und für Glas eine Brechkraft von n = 1,5 vorausgesetzt, dann gilt z.B.:

$$\frac{1}{f} = \frac{1}{r} = k \qquad (2)$$

Für Glas ist demnach die Brechkraft 1/f gleich der Krümmung k. Für die Krümmung gilt die Formel von EULER:

$$k = k_1 \cdot \cos^2\gamma + k_2 \cdot \sin^2\gamma \qquad (3),$$

wobei der Winkel $\gamma$ ein Winkel im Linsenkoordinatensystem ist, bei dem für $\gamma = 0$ $k = k_1$ und für $\gamma = 90°$ $k = k_2$ gilt.

Die Erfindung nutzt die Erkenntnis aus der Formel von EULER (Gleichung (3)) und Fig. 2, dass zu einer vollständigen Charakterisierung der Krümmung einer beliebigen Linse und damit zur Charakterisierung der Brechkraft an jeder Stelle (in jedem Volumenelement mit der Dicke h) die beiden Hauptkrümmungen $k_1$, $k_2$ und die Orientierung $\varphi$ der Linse zu dem ortsfesten Koordinatensystem 5 bekannt sein müssen. In Fig. 3 ist als Beispiel für eine Zerlegung des Objekts in eine Vielzahl von Volumenelementen ein Abschnitt eines transparenten Körpers 10, z.B. ein Abschnitt einer Windschutzscheibe, dargestellt, wobei dieser Abschnitt zerlegt ist in 10 x 7 Volumenelemente 11.

Das erfindungsgemäße Verfahren beruht ferner auf der Erkenntnis, dass Linien eines Linienrasters durch eine nicht sphärische Linse azimutal gedreht und dessen Linienabstand verändert wird. Dies bedeutet, dass die Abbildung des Linienrasters abhängig von der Brechkraft an der jeweiligen Stelle einen anderen Linienabstand aufweist als das (ursprüngliche) Linienraster und die Linien der Abbildung zusätzlich gegenüber dem (ursprünglichen) Linienraster gedreht sind. Dies wird in der Abbildung eines Linienrasters durch die Linse sichtbar.

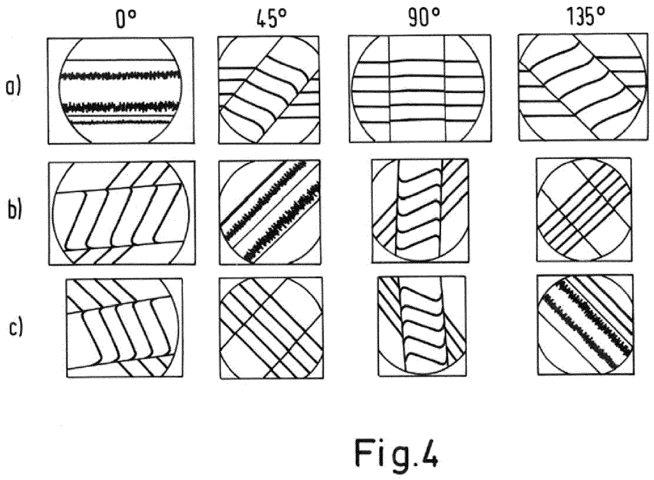

Beispielhaft für diesen Effekt sind in Fig. 4 Abbildungen eines Linienrasters durch eine Zylinderlinse unter ausgewählten Winkeln dargestellt. Wenn die Achse der Zylinderlinse in Richtung der Rasterlinien zeigt, findet nur eine Änderung des Linienabstands statt. Wenn die Zylinderachse senkrecht zu den Rasterlinien steht, dann werden die Rasterlinien nicht verändert. In allen anderen Fällen findet eine Drehung und Veränderung des Linienabstands in Abhängigkeit von der Brechkraft statt.

Der oben beschriebene Effekt wird erfindungsgemäß in einem Rasterverfahren, mit dem das gesamte transparente Objekt element- oder stellenweise erfasst wird, genutzt. Mittels einer Kamera erfolgt eine stellenweise Erfassung der Abbildung eines ersten Linienrasters. Die Recheneinheit bestimmt anhand der Abbildung den Abstand der Linien und/oder deren Drehung bezogen auf das Linienraster. Hieraus kann durch die Recheneinheit, wie nachfolgend dargestellt werden soll, die Brechkraft an jeder Stelle des Objekts ermittelt werden.

Im Rahmen der Beschreibung der vorliegenden Erfindung wird der Linienabstand als Linienbreite einer schwarzen (dunklen) Linie oder eines schwarzen (dunklen) Streifens und/oder einer weißen (hellen) Linie oder eines weißen (hellen) Streifens, die abwechselnd nebeneinander liegen, in die Richtung quer zu den Linien bezeichnet. Im Hinblick auf die vorliegende Erfindung wird der Linienabstand bei der Vermessung der Abbildung des Linienrasters durch das Objekt vorzugsweise senkrecht zu den Linien des jeweiligen, für die Messung verwendeten Linienrasters ermittelt.

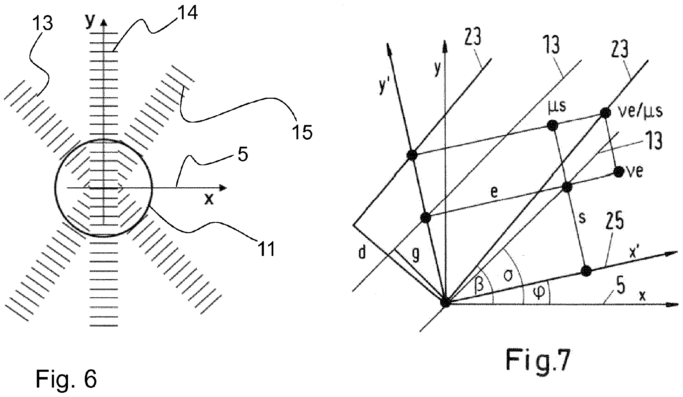

Phänomenologisch ist die Abbildung eines schräg verlaufenden Linienrasters durch eine nicht sphärische Linse ($k_1 \neq k_2$) in Fig. 7 dargestellt. Die Linse wird vor den Rasterlinien azimutal gedreht. Man erkennt, dass die Rasterlinien je nach Drehwinkel sowohl ihre Richtung als auch ihre Abstände ändern. Nur in Ausnahmefällen bleiben Richtung und Abstände gleich.

Im Detail wird in Fig. 7. eine Linse mit den Hauptachsen x' und y' (Koordinatensystem 25) relativ zu einem ortsfesten Koordinatensystem 5 betrachtet. Die Linse bildet ein Linienraster 13 ab, das zum ortsfesten Koordinatensystem 5 um den Winkel $\sigma$ verdreht ist. Durch die Abbildung der Linse wird das Linienraster 13 gedreht, so dass das Linienraster 23 der Abbildung mit dem ortsfesten Koordinatensystem 5 den Winkel $\beta$ bildet. Der Linienabstand g des ursprünglichen Linienrasters 13 wird zu d im Koordinatensystem 25 der Abbildung. Ferner wird der Punkt (e, s) auf dem ursprünglichen Linienraster 13 mit den Faktoren v und $\mu$ auf den Punkt (ve, $\mu$s) auf das Linienraster 23 der Abbildung transformiert. Der Punkt (0, s) wird auf (0, $\mu$s) abgebildet. Aus Fig. 7 lassen sich dann folgende Beziehungen ablesen:

$$\frac{g}{s} = \cos(\sigma - \varphi)$$

$$\frac{s}{e} = tg(\sigma - \varphi)$$

$$\frac{d}{\mu s} = \cos(\beta - \varphi) \qquad (4),$$

$$\frac{d}{ve} = \sin(\beta - \varphi)$$

wobei die Parameter folgende Bedeutung haben:

$\sigma$ = Winkel des ursprünglichen Linienrasters 13 (gestrichelte Linien) gegenüber dem ortsfesten Koordinatensystem 5,
$\varphi$ = Drehwinkel der Linse (des Linsenkoordinatensystems 25) gegenüber dem ortsfesten Koordinatensystem 5,
$\beta$ = Winkel des abgebildeten Linienrasters 23 gegenüber dem ortsfesten Koordinatensystem 5.

Die Faktoren v und $\mu$ ergeben sich aus den Abbildungsgleichungen für Linsen.

$$\mu = \frac{1}{1 - a \cdot k_1}$$

$$v = \frac{1}{1 - a \cdot k_2} \qquad (5)$$

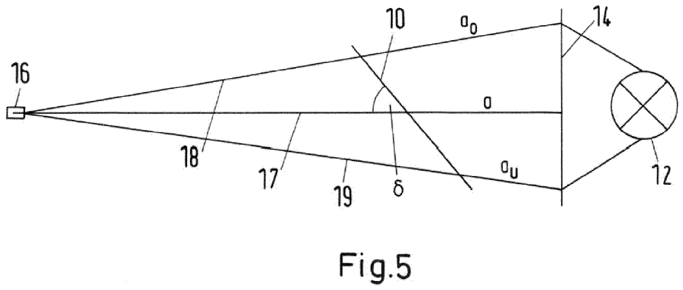

Dabei ist a der Abstand zwischen Raster und zu vermessendem Objekt (siehe Fig. 5). Damit ist auch klar, dass es sich nicht um ein Moire-Verfahren handelt, sondern um die Feststellung von Streifenbreiten und Drehung von Streifen durch Abbildung mittels einer Linse.

Für den Punkt (ve, $\mu$s) im Linsenkoordinatensystem sollen nun die Koordinaten (x, y) im ortsfesten Koordinatensystem gefunden werden. Die Koordinatensysteme sind um den Winkel $\varphi$ gegeneinander gedreht, so dass sich Folgendes ergibt:

$$\begin{pmatrix} x \\ y \end{pmatrix} = \begin{pmatrix} \cos\varphi & -\sin\varphi \\ \sin\varphi & \cos\varphi \end{pmatrix} \cdot \begin{pmatrix} ve \\ \mu s \end{pmatrix} = \begin{pmatrix} ve \cdot \cos\varphi - \mu s \cdot \sin\varphi \\ ve \cdot \sin\varphi + \mu s \cdot \cos\varphi \end{pmatrix}$$

$$tg\beta = \frac{y}{x} = \frac{ve \cdot \sin\varphi + \mu s \cdot \cos\varphi}{ve \cdot \cos\varphi - \mu s \cdot \sin\varphi} = \frac{ve \cdot tg\varphi + \mu s}{ve - \mu s \cdot tg\varphi} = \frac{v \cdot tg\varphi + \mu \cdot tg(\sigma - \varphi)}{v - \mu \cdot tg\varphi \cdot tg(\sigma - \varphi)} \qquad (6)$$

$$= \frac{v \cdot \sin\varphi \cdot \cos(\sigma - \varphi) + \mu \cdot \sin(\sigma - \varphi) \cdot \cos\varphi}{v \cdot \cos\varphi \cdot \cos(\sigma - \varphi) - \mu \cdot \sin\varphi \cdot \sin(\sigma - \varphi)}$$

$$d = \mu \cdot g \cdot \frac{\cos(\beta - \varphi)}{\cos(\sigma - \varphi)} = v \cdot g \cdot \frac{\sin(\beta - \varphi)}{\sin(\sigma - \varphi)}$$

Das durch eine Linse abgebildete Linienraster 23 bildet mit dem ortsfesten Koordinatensystem den Winkel $\beta$ und d ist die Linienbreite des abgebildeten Rasters. Für d ergeben sich kritische Stellen bei $\sigma - \varphi = 0°$ oder 90°. Dann gilt entweder die erste oder die zweite Gleichung.
Für ein horizontales Raster gilt $\sigma = 0$. Damit ergibt sich:

$$tg\beta = \frac{(v-\mu)\cdot tg\varphi}{v + \mu \cdot tg^2\varphi}$$

$$d = \mu \cdot g \cdot \frac{\cos(\beta-\varphi)}{\cos\varphi} = -v \cdot g \cdot \frac{\sin(\beta-\varphi)}{\sin\varphi} \qquad (7)$$

Für eine sphärische Linse gilt $v = \mu$. In diesem Fall erhält man:

$$tg\beta = \frac{tg\varphi + tg(\sigma-\varphi)}{1 - tg\varphi \cdot tg(\sigma-\varphi)} = tg\sigma \qquad (8)$$

$$d = \mu \cdot g$$

Da $\beta = \sigma$ gilt, wird das ursprüngliche Raster durch eine sphärische Linse nicht gedreht. Beim horizontalen Raster wird der Linienabstand senkrecht zu den Rasterlinien des ursprünglichen Rasters gescannt. Da das ursprüngliche Raster durch die Abbildung durch eine Linse gedreht wird, wird bei der Erfassung des Linienabstands vorzugsweise senkrecht zu den Linien des ersten Linienrasters (senkrechter Scan) statt d ein $d_s$ gemessen. Es gilt:

$$d_s = \frac{d}{\cos\beta} \qquad (9)$$

Als Messwert $M_h$ für ein horizontales Raster soll die Abweichung der senkrecht gemessenen Linienbreiten des abgebildeten Linienrasters zur Linienbreite des ursprünglichen Linienrasters definiert werden. Es soll also gelten:

$$M_h = d_s - g = \left[\frac{\mu \cdot \cos(\beta-\varphi)}{\cos\beta \cdot \cos\varphi} - 1\right] \cdot g = -\left[\frac{v \cdot \sin(\beta-\varphi)}{\cos\beta \cdot \sin\varphi} + 1\right] \cdot g \qquad (10)$$

Für eine sphärische Linse als Objekt ist, wie oben bereits dargestellt wurde, $\mu = v = m$ und daher $\beta = \sigma = 0$. Aus Gleichung (10) wird daher für die sphärische Linse:

$$M_h = d_s - g = [m-1] \cdot g \qquad (11)$$

Daher ist es bei der Vermessung einer sphärischen Linse erfindungsgemäß ausreichend, die Abbildung eines ersten Linsenrasters zu erfassen und hinsichtlich der Änderung des Linienabstandes auszuwerten.

Für beliebige Objektformen, d.h. beliebige Linsenformen, werden die Werte zu den Hauptkrümmungen $k_1$, $k_2$ und dem Winkel $\varphi$ benötigt und es sind daher drei unabhängige, nacheinander oder gleichzeitig erfolgende Messungen erforderlich. Um drei unabhängige Messungen zu erhalten, kann das horizontale Gitter um einen bestimmten, festgelegten Winkel gedreht werden, wobei der Abstand der Linien vorzugsweise senkrecht zu den Rasterlinien des jeweiligen, für die Messung verwendeten Rasters der Rastervorrichtung ermittelt wird. Bei der gleichzeitigen Messung ist es erforderlich, dass die Abbildungen der verschiedenen Linienraster unterschieden werden können, um unabhängige Messungen zu erhalten. Dies kann dadurch realisiert werden, dass die Beleuchtung der Linienraster mit Licht unterschiedlicher Wellenlänge erfolgt und die Kamera entsprechend lediglich den Wellenlängenbereich der jeweiligen Abbildung erfasst und für die Wellenlänge der jeweils anderen Linienraster nicht empfindlich ist, so dass die Abbildungen der jeweils anderen Linienraster nicht stören.

Erfindungsgemäß wird ein Verfahren durchgeführt, bei dem mittels der Kamera zusätzlich eine zweite Abbildung eines zweiten Linienrasters und eine dritte Abbildung eines dritten Linienrasters an der mindestens einen vorbestimmten Stelle durch das Objekt erfasst wird, wobei ggf. die Linien des zweiten Linienrasters unter einem Winkel ungleich 0° (oder 180°) zu den Linien des ersten Linienrasters und ggf. die Linien des dritten Linienrasters unter einem Winkel ungleich 0° (oder 180° vorzugsweise auch ungleich 90°) zu den Linien des ersten Linienrasters und ggf. ungleich 0° (oder 180° und vorzugsweise auch ungleich 90°) zu den Linien des zweiten Linienrasters verlaufen, und mittels der Recheneinheit anschließend anhand der zweiten Abbildung und der dritten Abbildung jeweils der Linienabstand der zweiten Abbildung und der dritten Abbildung und/oder die Drehung der Linien bezogen auf das jeweilige Linienraster bestimmt und diese Daten zur Ermittlung der Brechkraft an der mindestens einen vorbestimmten Stelle des Objekts zusätzlich herangezogen werden. Der Linienabstand der zweiten Abbildung und der dritten Abbildung wird bezogen auf das jeweilige Linienraster bestimmt und hieraus die Brechkraft an der mindestens einen vorbestimmten Stelle des Objekts unter Berücksichtigung der Verdrehung der Linien in der Abbildung gegenüber dem Ausgangs-Linienraster ermittelt.

Die Bestimmung des Linienabstands bei der zweiten Abbildung erfolgt senkrecht (quer) zu den Linien des zweiten Linienrasters und bei der dritten Abbildung senkrecht (quer) zu den Linien des dritten Linienrasters.

Die entsprechenden Messwerte $M_r$ und $M_l$ (jeweils Abweichung der senkrecht gemessenen Linienbreiten des entsprechenden abgebildeten Linienrasters zur Linienbreite des jeweiligen ursprünglichen Linienrasters) zu der Abbildung des zweiten und dritten Linienrasters ergeben sich analog zu Gleichung (10), wobei das zweite Linienraster beispielsweise um den Winkel $\varepsilon_1$ zu dem ersten Linienraster und das dritte Linienraster um den Winkel $\varepsilon_2$ zu dem ersten Linienraster verdreht ist. Alternativ können das erste Linienraster und/oder das zweite Linienraster und/oder das dritte Linienraster zueinander (bei zueinander verdrehtem Linienraster) parallel verlaufen oder in einer gemeinsamen Ebene angeordnet sein. Der Vorteil dieser Messanordnung ist, dass für jede Stelle des Objekts drei Messungen durchgeführt werden, die sich nur bezüglich des Objektvorschubs unterscheiden, der dem Abstand der Linienraster entspricht. Bei gedrehten Linienrastern muss der Drehwinkel der Raster zueinander zusätzlich berücksichtigt werden.

Zur Ermittlung der Messwerte $M_r$, $M_l$ und $M_h$ wird das Objekt vorzugsweise nacheinander an dem ersten Linienraster und ggf. dem zweiten Linienraster und ggf. dem dritten Linienraster und mit der jeweils zugehörigen Kamera vorbei bewegt. Alternativ können auch die Linienraster bewegt werden.

Aus den drei Messwerten $M_h$, $M_l$, $M_r$ können die drei Parameter $k_1$, $k_2$ und der Drehwinkel $\varphi$ der Linse mittels eines Iterationsverfahrens (z.B. Excel Solver) eindeutig berechnet werden. Die Eindeutigkeit kann vorzugsweise dadurch hergestellt werden, dass zusätzlich die Bedingungen

$$\text{„aus } M_l < M_r \text{ folgt } \varphi < 90° \text{ und aus } M_l > M_r \text{ folgt } \varphi > 90°\text{"} \quad (12)$$

angewendet werden. Wenn dann die Hauptkrümmungen $k_1$, $k_2$ und deren azimutale Lage $\varphi$ im ortsfesten Koordinatensystem zur Verfügung stehen, kann die Brechkraft einer Linse unter jedem beliebigen Schnittwinkel mit Hilfe der Formel von EULER (Gleichung (3)) berechnet werden.

Die erforderliche Lichtintensität für die Abbildung der Linienraster kann dadurch erreicht werden, dass hinter dem ersten Linienraster und/oder ggf. dem zweiten Linienraster und/oder ggf. dem dritten Linienraster eine Lichtquelle angeordnet wird, welche Licht, vorzugsweise Weißlicht, durch das jeweilige Linienraster hindurch auf die Kamera wirft.

Alternativ kann die erfindungsgemäße Vorrichtung eine Leuchtwand mit einer Matrix aus Lichtquellen-Elementen aufweisen, die vorzugsweise als LEDs oder OLEDs ausgebildet sind. Mit Hilfe dieser Leuchtwand können nacheinander, z.B. durch Umschalten, das erste Linienraster und/oder das zweite Linienraster und/oder das dritte Linienraster erzeugt werden, so dass keine weitere Lichtquelle mehr notwendig ist. Alternativ können die Linienraster auch gleichzeitig durch LEDs oder OLEDs unterschiedlicher Farbe erzeugt werden. Die Lichtquellen-Elemente werden dazu derart angesteuert, dass ein erster Teil der Lichtquellen-Elemente die weißen oder hellen Linien und ein zweiter Teil der Lichtquellen-Elemente die jeweils zwischen zwei weißen Linien liegenden schwarzen oder dunklen Linien ausbildet. Die Linienbreite ist damit auf die Breite eines Lichtquellen-Elements begrenzt.

Beispielsweise aus Gründen der vorhandenen Normvorschriften kann es erforderlich sein, das transparente Objekt nicht nur senkrecht zur optischen Achse der Kamera anzuordnen, sondern es beispielsweise mit der Neigung, mit der es auch in einem Produkt eingesetzt wird, zu untersuchen. Z.B. kann gefordert werden, die Brechkraft einer Windschutzscheibe unter dem Neigungswinkel $\xi$ zur Horizontalen (= häufig die optische Achse) zu bestimmen, mit der sie im Fahrzeug eingesetzt wird. In diesem Fall ist erforderlich, die Neigung (Verkippung) des Objekts zur optischen Achse der Kamera zu berücksichtigen, und zwar in zweierlei Hinsicht. Erstens verstärken sich die Brechkräfte mit der Neigung des Objekts. Hierfür kann in der Berechnung ein entsprechender Verstärkungsfaktor berücksichtigt werden, der für ein bestimmtes Material für einen bestimmten Winkelbereich der Neigung des Objekts vorab ermittelt werden kann. Zweitens verändert sich entlang des Objekts der Abstand des Objekts vom jeweiligen Linienraster. Daher ist der Abstand a der jeweiligen Stelle des Objekts von dem jeweiligen Linienraster zu berücksichtigen (vgl. Gleichung (5)).

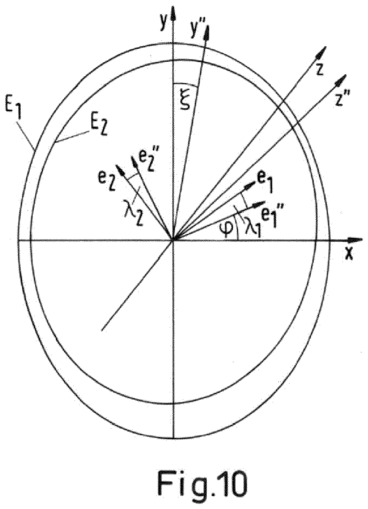

Wenn das Objekt um einen Winkel $\xi$, beispielsweise um die x-Achse geneigt wird (siehe Fig. 10), so verstärken sich die Komponenten $e_1$ und $e_2$ der Brechkraft an einer bestimmten Stelle des Objekts bezogen auf einen Winkel $\lambda_1$ und $\lambda_2$, wobei diese Winkel im Allgemeinen kleiner als $\xi$ sind, $\lambda_1$ nimmt den Winkel $\xi$ an für $\varphi = 90°$.

Fig. 10 zeigt die Ebene E1 (in dem x-y-z-Koordinatensystem), welche der x-y-Ebene der Fig. 7, d.h. einem senkrecht gestellten Objekt, entspricht. Die Ebene $E_1$ wird um den Winkel $\xi$ um die x-Achse geneigt und auf diese Weise zur Ebene $E_2$ mit dem x-y"-z"-Koordinatensystem. Die Vektoren $e_1$ und $e_2$ liegen in der Ebene $E_1$. Die Vektoren $e"_1$ und $e"_2$ liegen in der Ebene $E_2$ und sind aus der Drehung der Vektoren $e_1$ und $e_2$ um die x-Achse hervorgegangen. Die Winkel $\lambda 1$ zwischen den Vektoren $e_1$ und $e"_1$ und $\lambda_2$ zwischen den Vektoren $e_2$ und $e"_2$ sind abhängig vom Drehwinkel

φ und dem Neigungswinkel ξ.

Die entsprechenden Verstärkungsfaktoren berechnen sich zu:

$$V(\lambda_1) = \frac{\sqrt{n^2 - \sin^2\lambda_1} - \cos\lambda_1}{(n-1)\cdot\cos\lambda_1}$$

und                                                                                     (13)

$$V(\lambda_2) = \frac{\sqrt{n^2 - \sin^2\lambda_2} - \cos\lambda_2}{(n-1)\cdot\cos\lambda_2},$$

wobei

$$\cos\lambda_1 = \cos^2\varphi + \sin^2\varphi \cdot \cos\xi$$

und                                                                                     (13a).

$$\cos\lambda_2 = \sin^2\varphi + \cos^2\varphi \cdot \cos\xi$$

Hieraus können die für die Abbildung des Gitters relevanten Faktoren μ und ν wie folgt berechnet werden:

$$\mu = \frac{1}{1 - a \cdot V(\lambda_2) \cdot k_1}$$

                                                                                        (14)

$$\nu = \frac{1}{1 - a \cdot V(\lambda_1) \cdot k_2}$$

Die Drehung der Rasterlinien tg β und der Messwert $M_h$ können dann anhand der Gleichungen (7) und (10) analog ermittelt werden.

Die obige Aufgabe wird ferner durch eine Vorrichtung mit den Merkmalen des Anspruchs 6 gelöst.

Die Vorrichtung weist eine Kamera, ein erstes, vorzugsweise streifen- oder linienförmiges Linienraster, wobei die Kamera die erste Abbildung des ersten Linienrasters durch das Objekt stellenweise, vorzugsweise in einem linien- oder streifenförmigen Bereich erfasst, und eine Recheneinheit auf, wobei die Recheneinheit anschließend anhand der ersten Abbildung den Linienabstand der ersten Abbildung und/oder die Drehung der Linien bezogen auf das erste Linienraster bestimmt und hieraus die Brechkraft an der jeweiligen Stelle (in dem jeweiligen Volumenelement) des Objekts ermittelt. Erfindungsgemäß wird anhand der ersten Abbildung der Linienabstand der ersten Abbildung in eine Richtung quer zu den Linien des ersten Linienrasters erfasst und hieraus unter Berücksichtigung der Drehung der Linien die Brechkraft an der jeweiligen Stelle (in dem jeweiligen Volumenelement) des Objekts ermittelt.

Die Vorteile einer derartigen Vorrichtung wurden oben bereits hinsichtlich des erfindungsgemäßen Verfahrens erläutert.

Wie oben bereit ausgeführt wurde, ist es erforderlich, wenn zusätzlich ein zweites Linienraster für die Erzeugung einer zweiten Abbildung durch das Objekt und ein drittes Linienraster für die Erzeugung einer dritten Abbildung eines dritten Linienrasters durch das Objekt an der jeweiligen Stelle vorgesehen ist, wobei ggf. die Linien des zweiten Linienrasters unter einem Winkel ungleich 0° (oder 180° vorzugsweise auch ungleich 90°) zu den Linien des ersten Linienrasters und ggf. die Linien des dritten Linienrasters unter einem Winkel ungleich 0° (oder 180° vorzugsweise auch ungleich 90°) zu den Linien des ersten Linienrasters und ggf. ungleich 0° (oder 180° und vorzugsweise auch ungleich 90°) zu den Linien des zweiten Linienrasters verlaufen, und mittels der Recheneinheit anschließend anhand der zweiten Abbildung und der dritten Abbildung jeweils der Linienabstand der zweiten Abbildung und der dritten Abbildung und die Drehung der Linien bezogen auf das jeweilige Linienraster bestimmt und diese Daten zur Ermittlung der Brechkraft an der jeweiligen Stelle des Objekts zusätzlich herangezogen werden. Der Linienabstand der zweiten Abbildung und der dritten Abbildung wird bezogen auf das jeweilige Linienraster bestimmt und hieraus die Brechkraft an der mindestens einen vorbestimmten Stelle des Objekts unter Berücksichtigung der Drehung der Linien ermittelt.

Weiter bevorzugt ist, wenn die Kamera als eine Matrix- oder eine Zeilenkamera ausgebildet ist und wenn die erfindungsgemäße Vorrichtung vorzugsweise für die jeweilige Abbildung des ersten Linienrasters, ggf. des zweiten Linienrasters und ggf. des dritten Linienrasters eine separate Kamera aufweist, wobei vorzugsweise die Kamera derart angeordnet und die Recheneinheit derart betrieben wird, dass die Linienbreite senkrecht zu dem jeweiligen Linienraster bestimmt werden.

Die Erfindung wird nachfolgend anhand von Ausführungsbeispielen und unter Bezugnahme auf die Figuren näher erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:

Fig. 1   die Verzerrung einer Kreisscheibe durch die Brechkraft eines transparenten Objekts zu einer Ellipse gemäß eines Verfahrens nach dem Stand der Technik,

Fig. 2   das Verhalten des Linsenmodells an einer beliebigen Stelle des Objekts mit zwei Hauptkrümmungen $k_1$ und $k_2$ in einem ortsfesten Koordinatensystem,

Fig. 3   einen Abschnitt eines transparenten Objekts, z.B. einer Windschutzscheibe, zerlegt in Stellen (Volumenelemente) in einer perspektivischen Ansicht von der Seite,

Fig. 4   Fotografien der Abbildung eines Linienrasters durch eine Zylinderlinse für ein horizontales Raster (a)), ein schräg nach rechts gedrehtes Raster (b)) und ein schräg nach links gedrehtes Raster bei Anordnungen der Zylinderlinse unter verschiedenem Winkel zur Horizontalen (siehe Kopfzeile),

Fig. 5   ein Ausführungsbeispiel einer erfindungsgemäßen Vorrichtung in einer Ansicht von der Seite,

Fig. 6   eine Prinzipskizze zu dem Vorgehen bei einem ersten Ausführungsbeispiel eines erfindungsgemäßen Verfahrens in einer Ansicht aus Richtung der Kamera,

Fig. 6a   ein streifenförmiges Linienraster in einer Ansicht von vorn,

Fig. 7   die Abbildung eines Linienrasters durch eine Linse nach dem erfindungsgemäßen Verfahren im Detail,

Fig. 8   eine erfindungsgemäße Vorrichtung zu dem in Fig. 6 dargestellten ersten Ausführungsbeispiel eines erfindungsgemäßen Verfahrens in einer Ansicht aus Richtung der Kamera,

Fig. 9   ein zweites Ausführungsbeispiel eines erfindungsgemäßen Verfahrens in einer Ansicht aus Richtung der Kamera,

Fig. 10   Veränderung des Ortsvektors in zwei Ebenen zu einem Punkt im Linsenkoordinatensystem bei Neigung des Objekts,

Fig. 11   Kurven für gerechnete Brechwerte in [$m^{-1}$] für horizontales, rechtes und linkes Raster, wobei die Scanrichtung jeweils senkrecht zu den Gitterlinien verläuft (für $M_l < M_r$ gilt $\varphi < 90°$, für $M_l > M_r$ gilt $\varphi > 90°$), aufgetragen über dem azimutalen Winkel, den eine Linse an einer Stelle eines Objekts annehmen kann,

Fig. 12   die Darstellung gemäß Fig. 10, jedoch mit $k_1 = 0,6$ $m^{-1}$,

Fig. 13   die Kurven gemäß Fig. 11 in einer Darstellung gemäß Fig. 10, jedoch mit einem Abstand a zwischen Linienraster und transparentem Objekt von 0,4 m,

Fig. 14   die Darstellung gemäß Fig. 10 für eine sphärische Linse, wobei $k_1 = k_2 = 0,08$ $m^{-1}$ gilt,

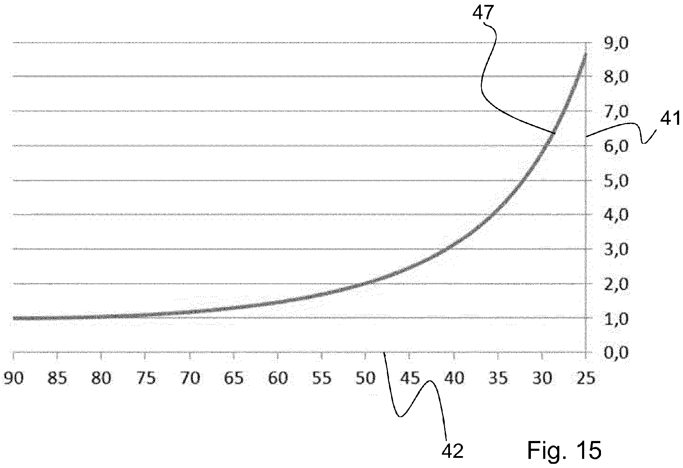

Fig. 15   den Verstärkungsfaktor zur Ermittlung der Brechkraft aufgetragen über dem Neigungswinkel $\xi$ des transparenten Objekts aus Glas mit einem Brechungsindex n = 1,5 und

Fig. 16   die Kurven gemäß Fig. 11 mit $k_1 = 0,08$ $m^{-1}$, $k_2 = -0,02$, einer Gitterdrehung $\varepsilon_1 = 45°$, $\varepsilon_2 = -45°$ und einer Neigung $\xi = 50°$ sowie a = 1 m.

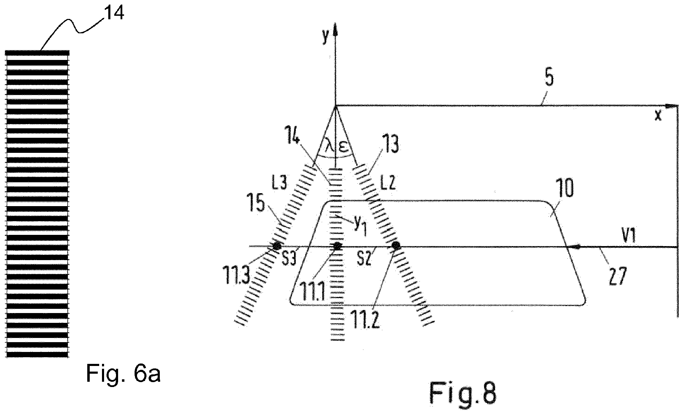

Das in Fig. 5 gezeigte Ausführungsbeispiel einer erfindungsgemäßen Vorrichtung zeigt ein transparentes Objekt z.B. in Form einer Windschutzscheibe 10 für ein Kraftfahrzeug, die zwischen einem horizontalen, streifenförmigen Linienraster 14 und einer Kamera 16 angeordnet ist. Das horizontale Linienraster 14 wird auf der der Windschutzscheibe 10 gegenüber liegenden Seite von einer Lichtquelle 12 beleuchtet, z.B. in Form einer Leuchtstoffröhre, die über ihre Länge eine konstante Intensität aufweist. Das Muster des Linienrasters 14 wird an der Windschutzscheibe gebrochen und auf die Kamera 16 abgebildet. Ein bei einer solchen Messung verwendetes streifenförmiges Linienraster ist detaillierter in Fig. 6a abgebildet.

Für die Bestimmung der lokalen Brechkraft über die gesamte Windschutzscheibe 10, welche sich, wie in Fig. 3 an einem Ausschnitt dargestellt wird, aus einer Vielzahl von Stellen (Volumenelementen) 11 zusammensetzt, werden in einem ersten Ausführungsbeispiel des erfindungsgemäßen Verfahrens drei zueinander verdrehte streifenförmige Linienraster 13, 14 und 15 verwendet, welche in den Fig. 6 und 8 dargestellt sind. Das rechte Linienraster 13 ist gegenüber dem horizontalen Linienraster um den Winkel $\varepsilon_1$ = -30° gedreht und das linke Linienraster 15 um den Winkel $\varepsilon_2$ = 30°. Um den gleichen Winkel sind jeweils auch die Linien des jeweiligen Linienrasters 13, 15 gegenüber der Horizontalen gedreht.

Ein für eine solche Messung verwendetes streifenförmiges Linienraster 14 ist auch in Fig. 6a dargestellt. Analog sind auch die streifenförmigen Linienraster 13, 15 aufgebaut, welche lediglich zum Linienraster 14 gedreht sind.

Wie oben im allgemeinen Beschreibungsteil ausführlich dargelegt wurde, sind, um die Krümmungen k1, k2 und der Winkel $\varphi$ bzw. die Brechkraft zu bestimmen, für jede Stelle 11 der Windschutzscheibe 10 drei unabhängige Messungen nacheinander oder gleichzeitig anhand von drei zueinander verdrehten Linienrastern durchzuführen (vgl. Fig. 6 und 8), welche in einer Ebene angeordnet sind. Hierfür wird die Windschutzscheibe 10 mit einer bestimmten, vorgegebenen Geschwindigkeit an den nebeneinander oder übereinander angeordneten Linienrastern 13, 14, 15 vorbei geführt. In dem in Fig. 8 gezeigten Fall wurde die Windschutzscheibe bereits um die Strecke V1 zu Analysezwecken verschoben. Die Bewegungsrichtung der Windschutzscheibe 10 ist in Fig. 8 mit dem Pfeil 27 gekennzeichnet. Die Stelle 11.1 liegt für das horizontale Linienraster 14 bei der Gitterposition $y_1$ und beim Vorschub der Scheibe V1. Die nachfolgenden Beziehungen ergeben sich aus den geometrischen Verhältnissen der Fig. 8 wie folgt:

$$L2 = \frac{y_1}{\cos\varepsilon}$$
$$S2 = y_1 \cdot tg\varepsilon$$
$$L3 = \frac{y_1}{\cos\lambda}$$
$$S3 = y_1 \cdot tg\lambda$$

$$(14)$$

Der zu der Stelle 11.2 gehörige Messwert auf dem rechten Linienraster 13 wird gewonnen bei der Position L2 und dem Vorschub Vr = V1 - S2. Auf dem linken Linienraster erfolgt die Messung bei der Position L3 und dem Vorschub Vl = V1 + S3.

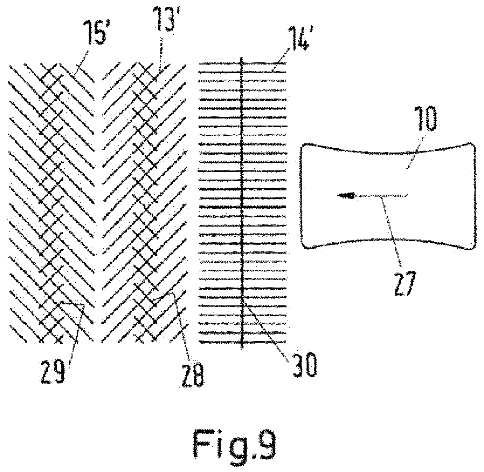

Alternativ kann in der Nähe des horizontalen Rasters 14', wie in Fig. 9 dargestellt, auch mittels Schräglinienraster 13', 15' die Brechkraft gemessen werden. Bei diesem Ausführungsbeispiel verlaufen die Linienraster 13', 15' parallel zu dem Linienraster 14', die Linien der jeweiligen Raster sind jedoch verdreht zueinander. In diesem Falle wird mittels einer Matrixkamera an jeder Stelle senkrecht zu den Rasterlinien der Linienraster 13', 15' der Linienabstand nach der Abbildung durch die Windschutzscheibe 10 ermittelt (gescannt). Die jeweilige Scanrichtung ist durch eine oder mehrere Linien 28, 29, 30 in der Mitte des jeweiligen Linienrasters 13', 14', 15' eingezeichnet. Eine solche Anordnung hat den Vorteil, dass für jede Stelle 11 der Windschutzscheibe 10 drei Messungen durchgeführt werden können, die sich nur bezüglich des Scheibenvorschubs unterscheiden, der dem Abstand der Linienraster 13', 14', 15' entspricht.

Weiter alternativ können mittels schaltbarer lichttechnischer Mittel die Linienraster 13', 14', 15' an einer Stelle erzeugt und die drei entsprechenden Bilder an dieser Stelle aufgenommen werden. Bei diesem Ausführungsbeispiel kann z.B. an der Stelle des horizontalen Linienrasters 14' mit den schaltbaren lichttechnischen Mitteln auch die beiden Schräglinienraster 13', 15' zeitlich nacheinander herstellen. Mit einer Matrixkamera müssten dann ebenfalls zeitlich nacheinander drei Bilder aufgenommen werden. Die Bilder können nach den gewünschten Scanrichtungen ausgewertet werden.

In Fig. 8 soll $\varepsilon_1$ = $\varepsilon_2$ = $\varepsilon$ gelten. Bei Drehung der Linse vor dem Raster würde das linke Linienraster 15 die Messung nicht bei $\varphi$ wie beim horizontalen, sondern bei $\varphi + \varepsilon$ beginnen. Bei dem rechten Linienraster 13 beginnt die Messung bei $\varphi - \varepsilon$. (In Fig. 9 sind rechtes Linienraster 15' und linkes Linienraster 13' gegenüber Fig. 8 vertauscht.)

Die Verhältnisse in Fig. 9 zu Grunde gelegt, werden aus den Messwerten $M_h$, $M_l$ und $M_r$ die Brechkraft für jede Stelle berechnet anhand der folgenden Gleichungen:

$$M_h = \left[\frac{\mu \cdot \cos(\beta - \varphi)}{\cos\beta \cdot \cos\varphi} - 1\right] \cdot g = -\left[\frac{v \cdot \sin(\beta - \varphi)}{\cos\beta \cdot \sin\varphi} + 1\right] \cdot g$$

$$M_l = \left[\frac{\mu \cdot \cos(\beta - \varphi - \lambda)}{\cos\beta \cdot \cos(\varphi + \lambda)} - 1\right] \cdot g = -\left[\frac{v \cdot \sin(\beta - \varphi - \lambda)}{\cos\beta \cdot \sin\varphi(\varphi + \lambda)} + 1\right] \cdot g \qquad (15)$$

$$M_r = \left[\frac{\mu \cdot \cos(\beta - \varphi + \lambda)}{\cos\beta \cdot \cos(\varphi - \lambda)} - 1\right] \cdot g = -\left[\frac{v \cdot \sin(\beta - \varphi + \lambda)}{\cos\beta \cdot \sin\varphi(\varphi - \lambda)} + 1\right] \cdot g$$

Im Folgenden sollen die Messwerte grafisch dargestellt werden, wobei folgende Parameter verwendet werden:

$\varepsilon_1 = \varepsilon_2 = 45°$,
$k_1 = 0{,}080$,
$k_2 = -0{,}020$,
$a = 1$ m,
$g = 1$ mm.

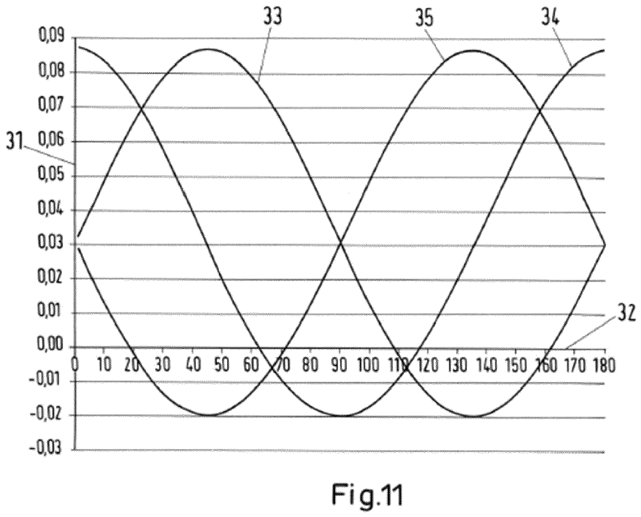

Damit ergeben sich die Kurven der Fig. 11, in der die Kurve für den Messwert $M_r$ mit dem Bezugszeichen 33, die Kurve für den Messwert $M_h$ mit dem Bezugszeichen 34 und die Kurve mit dem Messwert $M_l$ mit dem Bezugszeichen 35 versehen ist, wobei $M_l < M_r$ gilt $\varphi < 90°$. Für $M_l > M_r$ gilt $\varphi > 90°$. Die x-Achse 32 des Diagramms der Fig. 11 gibt den Drehwinkel der an der jeweiligen Stelle ausgebildeten Linse in [°] und die y-Achse 31 den Messwert $M_h$, $M_r$ bzw. $M_l$ in [m$^{-1}$] an.

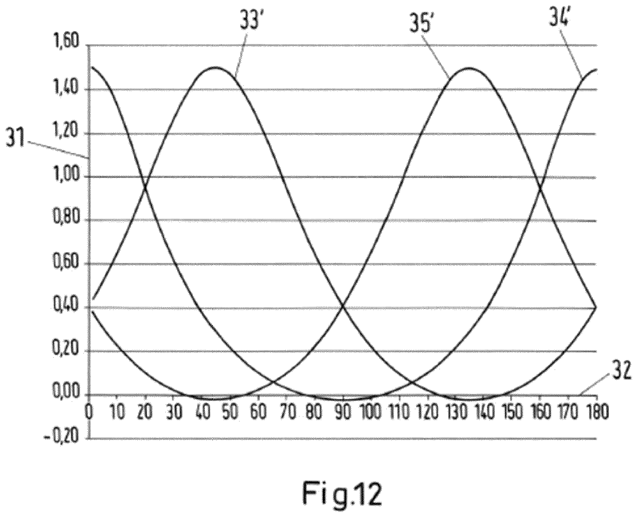

Die Kurven verzerren sich, wenn man $k_1 = 0{,}6$ m$^{-1}$ annimmt, wie aus Fig. 12 hervorgeht. Ist die Brennweite der Linse gleich dem Abstand a zwischen Linienraster 13', 14', 15' und Windschutzscheibe 10, dann ist eine Messung nicht mehr sinnvoll. Der Abstand a sollte kleiner als die Brennweite der Linse sein. Eine rechtzeitige Verkürzung des Abstandes a ist daher bei größer werdenden Brechkräften sinnvoll.

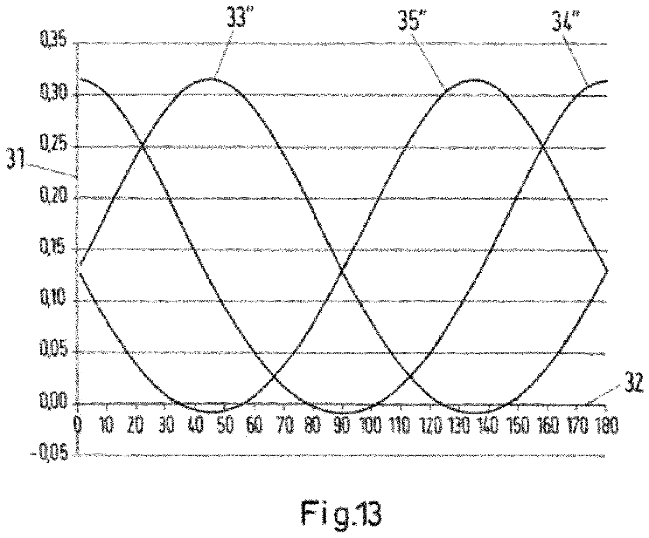

Diese Verzerrungen werden vermieden, wenn der Abstand a zwischen Linienraster 13', 14', 15' und Windschutzscheibe 10 auf 0,4 m verkürzt wird. Das ist in den Kurven der Fig. 13 zu sehen.

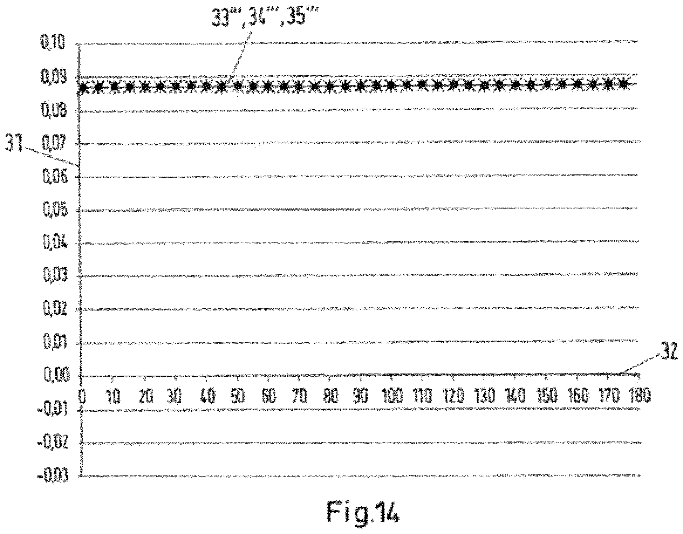

Für eine sphärische Linse sind alle Messwerte gleich, wenn die Linienabstände der Linienraster 13', 14', 15' gleich sind. Das ist in Fig. 14 dargestellt. Der Parametersatz zur Berechnung der Kurven in Fig. 11 wurde verändert durch $k_1 = k_2 = 0{,}08$ m$^{-1}$.

Die bisher beschriebenen Verfahren beziehen sich auf die Vermessung einer senkrecht gestellten Scheibe vor einem senkrechten Raster. In vielen Fällen ist es erforderlich, eine geneigte (verkippte) Windschutzscheibe 10, z.B. in Einbaulage, zu vermessen. Die Messanordnung hierzu wird in Fig. 5 dargestellt. Ferner zeigt Fig. 11 die Veränderung der Brechkraft einer Linse an einer Stelle bei einer Neigung des Objekts um den Winkel $\xi$ um die x-Achse des dreidimensionalen Koordinatensystems mit den Achsen x, y und z.

Für Glas mit dem Brechungsindex n = 1,5 kann mit Hilfe der oben angegebenen Gleichung (12) der Verstärkungsfaktor V berechnet werden, der in Fig. 14 mit der Kurve 47 über der Achse 42 dargestellt ist, wobei auf Achse 42 der Neigungswinkel $\xi$ der Windschutzscheibe 10 aufgetragen ist. Dieser wird bei der Ermittlung der Brechkraft an den Stellen 11 der Windschutzscheibe 12 durch die nicht dargestellte Recheneinheit berücksichtigt. Aus Fig. 5 geht zudem hervor, dass sich der Abstand $a_o$ der Windschutzscheibe 10 zu dem Linienraster 14 im Bereich eines oberen Randstrahls 18 aufgrund der Neigung der Windschutzscheibe 10 zur optischen Achse 17 über den Abstand a im Bereich der optischen Achse 17 bis zum Abstand $a_u$ im Bereich eines unteren Randstahls 19 der Abbildung verändert. Diese Abstandsänderung der geneigten Windschutzscheibe 10 über ihre gesamte Höhe wird in den Formeln bereits berücksichtigt. Eine von der Ebene $E_1$ in die Ebene $E_2$ gedrehte Linse kann wie die Linse in der Ebene $E_1$ alle möglichen azimutalen Positionen einnehmen. Um sich die möglichen Messwerte zu veranschaulichen, dreht man die Linse um den Winkel $\varphi$. Mit dem senkrechten Scan ($M_h$) erhält man größere Extremwerte als mit den Scans unter gedrehtem Winkel ($M_r$, $M_l$). Eine Hauptkrümmung mit maximaler Drehung misst man nur mit dem senkrechten Scan. Ist die Scheibe nicht geneigt, sind die Extremwerte für alle Messungen gleich.

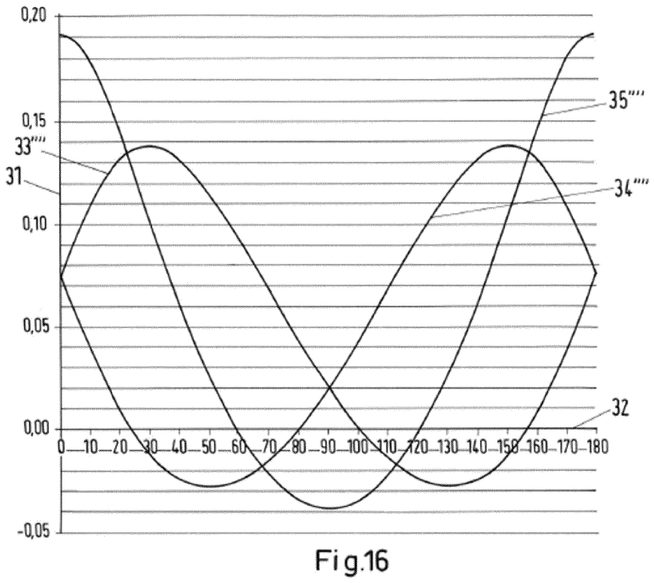

Die Fig. 16 entspricht der oben erläuterten Fig. 11 mit folgenden Parametern:

- $k_1 = 0{,}08$, $k_2 = -0{,}02$ ,
- Gitterdrehung $\varepsilon_1 = 45°$ (Kurve 33"") und $\varepsilon_2 = -45°$ (Kurve 34""),
- Scheibenneigung $\xi = 50°$ und
- Abstand Gitter - Scheibenmitte a = 1 m,

wobei das Objekt (Scheibe) um den Winkel $\xi$ gegenüber der optischen Achse geneigt wurde. Dabei wird in der Scheibenmitte gemessen. Die Kurve mit dem Bezugszeichen 35"" entspricht Messungen mit senkrechtem Gitter. Hierbei sind die Extremwerte der Kurven 33"" und 34""gleich, weil die Gitter symmetrisch zum senkrechten Gitter um denselben Winkel gedreht wurden. Diese Extremwerte sind jedoch niedriger als die Extremwerte für die Messung mit dem senkrechten Gitter (siehe Kurve 35""). Die unterschiedlichen Extremwerte für einen senkrechten Scan und für den Scan mit gedrehtem Gitter ergeben sich aus dem Grund, weil dann, wenn eine Zylinderlinse in der $E_2$- Ebene gedreht wird, nur das senkrechte Gitter die Hauptkrümmung bei der maximalen Verdrehung scannt. Mit den gedrehten Gittern werden die Hauptkrümmungen nicht bei der maximalen Verdrehung gescannt.

**Bezugszeichenliste / Liste der Variablen**

| | |
|---|---|
| 5 | ortsfestes Koordinatensystem |
| 7 | Kreisscheibe |
| 9 | Ellipse |
| 10 | Windschutzscheibe |
| 11 | Stelle (Volumenelement) der Windschutzscheibe 10 |
| 11.1, 11.2 | Stelle (Volumenelement) der Windschutzscheibe 10 |
| 11.3 | Stelle (Volumenelement) der Windschutzscheibe 10 |
| 12 | Lichtquelle |
| 13, 14, 15 | Linienraster |
| 13', 14', 15' | Linienraster |
| 16 | Kamera |
| 17 | optische Achse der Kamera 16 |
| 18, 19 | Randstrahl |
| 23 | Linienraster der Abbildung |
| 25 | Koordinatensystem der Abbildung |
| 27 | Pfeil |
| 28, 29, 30 | Richtung, in der der Linienabstand des jeweiligen Linienrasters in der Abbildung bestimmt wird |
| 31 | y-Achse (Messwert in $m^{-1}$) |
| 32 | x-Achse (Drehwinkel in °) |
| 33, 33' | Kurve für den Messwert $M_r$ |
| 33", 33'", | Kurve für den Messwert $M_r$ |
| 33"" | Kurve für den Messwert $M_r$ |
| 34, 34' | Kurve für den Messwert $M_h$ |
| 34", 34'" | Kurve für den Messwert $M_h$ |
| 34"" | Kurve für den Messwert $M_h$ |
| 35, 35' | Kurve für den Messwert $M_l$ |
| 35", 35'" | Kurve für den Messwert $M_l$ |
| 35"" | Kurve für den Messwert $M_l$ |
| 41 | y-Achse (Verstärkungsfaktor) |
| 42 | x-Achse (Neigungswinkel in °) |
| 47 | Kurve für den Verstärkungsfaktor für Glas (Brechungsindex 1,5) |

| | |
|---|---|
| $a$, $a_o$, $a_u$ | Abstand der Windschutzscheibe 10 vom Linienraster 14 |
| $d$ | Linienabstand der Linienrasters 23 der Abbildung |
| $d_s$ | Linienabstand des Linienrasters 23 der Abbildung gemessen in eine Richtung senkrecht zu dem Linienraster 13 |
| $e$, $e_1$, $e_1"$ | Koordinaten eines Punktes auf dem Linienraster 13 |
| $e_2$, $e_2"$, $s$ | Koordinaten eines Punktes auf dem Linienraster 13 |
| $F$ | Verstärkungsfaktor |
| $f$ | Brennweite einer Linse |
| $g$ | Linienabstand des Linienrasters 13 |
| $k$ | Krümmung |
| $k1$, $k2$ | Krümmung in Richtung der Hauptachsen |
| $L2$, $L3$ | Strecke |
| $M_h$, $M_l$, $M_r$ | Messwerte der Linienrasterabbildung |

| n | Brechungsindex / Brechzahl |
|---|---|
| S2, S3 | Strecke |
| V1, Vr, Vl | Strecke einer Verschiebung |
| x, x', x", y, y', y", z, z" | Koordinaten |

| $\beta$ | Drehwinkel des Linienrasters 23 der Abbildung zum ortsfesten Koordinatensystem |
|---|---|
| $\gamma$ | Winkel im ortsfesten Koordinatensystem 5 |
| $\xi$ | Neigungswinkel der Windschutzscheibe 10 zur optischen Achse 17 |
| $\varepsilon, \varepsilon_1, \varepsilon_2$ | Drehwinkel des Linienrasters 13 zum horizontalen Linienraster 14 |
| $\varphi$ | Drehwinkel der Linse zu dem ortsfesten Koordinatensystem 5 |
| $\lambda, \lambda_1, \lambda_2$ | Drehwinkel des Linienrasters 15 zum horizontalen Linienraster 14 |
| $v, \mu$ | Faktoren der Abbildung |
| $\sigma$ | Drehwinkel des Linienrasters 13 zum ortsfesten Koordinatensystem 5 |

**Patentansprüche**

1. Verfahren zur Bestimmung der Brechkraft eines großflächigen transparenten Objekts (10), z.B. einer Windschutzscheibe, einer Sehhilfe, einer Kanzelverglasung, einer Helmverglasung oder dergl., wobei sich das Objekt aus einer Vielzahl von Volumenelementen zusammensetzt, wobei das Verhalten jedes Volumenelements jeweils mit einem Modell einer Linse angenähert wird,
wobei mittels einer Kamera (16) an mindestens einem vorbestimmten Volumenelement des Objekts eine erste Abbildung eines ersten Linienrasters (14, 14') durch das Objekt (10) erfasst und mittels einer Recheneinheit anschließend anhand der ersten Abbildung an dem mindestens einen vorbestimmten Volumenelement der Linienabstand der ersten Abbildung quer zu den Linien des ersten Linienrasters bestimmt wird,
wobei mittels der Kamera zusätzlich eine zweite Abbildung eines zweiten Linienrasters (13, 13') und eine dritte Abbildung eines dritten Linienrasters (15, 15') durch das Objekt (10) erfasst, wobei die Linien des zweiten Linienrasters (13, 13') unter einem Winkel ungleich 0° zu den Linien des ersten Linienrasters (14, 14') und die Linien des dritten Linienrasters (15, 15') unter einem Winkel ungleich 0° zu den Linien des ersten Linienrasters (14, 14') und ungleich 0° zu den Linien des zweiten Linienrasters (13, 13') verlaufen, und mittels der Recheneinheit anschließend anhand der zweiten Abbildung und der dritten Abbildung jeweils der Linienabstand der zweiten Abbildung und der dritten Abbildung quer zu den Linien des jeweiligen Linienrasters unter Berücksichtigung der Drehung der Linien bezogen auf das jeweilige Linienraster (13, 13', 14, 14', 15, 15') bestimmt, wobei auf der Basis der erhaltenen Linienabstände unter Berücksichtigung der Drehung der Linien bezogen auf das jeweilige Linienraster (13, 13', 14, 14', 15, 15') die Brechkraft in jede azimutale Richtung an dem mindestens einen vorbestimmten Volumenelement des Objekts (10) berechnet wird, wobei die Erfassung der ersten, zweiten und dritten Abbildung nacheinander oder gleichzeitig erfolgt, wobei bei der gleichzeitigen Erfassung der Abbildungen die erste, zweite und dritte Abbildung durch Beleuchtung der Linienraster mit Licht unterschiedlicher Wellenlänge erzeugt wird und die Kamera die unterschiedlichen Wellenlängenbereiche separat erfasst.

2. Verfahren nach einem der vorhergehenden Ansprüche, **dadurch gekennzeichnet, dass** die Bestimmung des Linienabstands bei der ersten Abbildung senkrecht zu dem ersten Linienraster (14, 14'), bei der zweiten Abbildung senkrecht zu dem zweiten Linienraster (13, 13') und bei der dritten Abbildung senkrecht zu dem dritten Linienraster (15, 15') erfolgt.

3. Verfahren nach einem der vorhergehenden Ansprüche, **dadurch gekennzeichnet, dass** das Objekt (10) nacheinander an dem ersten Linienraster (14, 14'), dem zweiten Linienraster und dem dritten Linienraster (15, 15') und der zugehörigen Kamera (16) vorbei bewegt wird, wobei vorzugsweise das erste Linienraster (14, 14') und das zweite Linienraster (13, 13') und das dritte Linienraster (15, 15') parallel zueinander verlaufen.

4. Verfahren nach einem der vorhergehenden Ansprüchen, **dadurch gekennzeichnet, dass** das erste Linienraster (14, 14'), das zweite Linienraster (13, 13') und das dritte Linienraster (15, 15') durch eine Leuchtwand mit einer Matrix aus Lichtquellen-Elementen, welche vorzugsweise als LEDs oder OLEDs ausgebildet sind, erzeugt werden.

5. Verfahren nach einem der vorhergehenden Ansprüche, **dadurch gekennzeichnet, dass** zusätzlich die Neigung des Objekts (10) zur optischen Achse der Kamera (16) berücksichtigt wird.

6. Vorrichtung zur Bestimmung der Brechkraft eines großflächigen transparenten Objekts (10), z.B. einer Windschutzscheibe, einer Sehhilfe, einer Kanzelverglasung, einer Helmverglasung oder dergl., wobei sich das Objekt aus einer Vielzahl von Volumenelementen zusammensetzt, wobei das Verhalten jedes Volumenelements jeweils mit einem Modell einer Linse angenähert wird, mit einer Kamera (16),

wobei die Vorrichtung ein erstes Linienraster (14, 14') und eine Recheneinheit aufweist, wobei die Kamera (16) die erste Abbildung des ersten Linienrasters (14, 14') durch das Objekt (10) an mindestens einem vorbestimmten Volumenelement des Objekts erfasst, wobei die Recheneinheit derart eingerichtet ist, dass sie anschließend anhand der ersten Abbildung den Linienabstand der ersten Abbildung quer zu den Linien des ersten Linienrasters an dem jeweiligen Volumenelement bestimmt,

wobei die Vorrichtung zusätzlich ein zweites Linienraster (13, 13') und ein drittes Linienraster (15, 15') aufweist, wobei die Linien des zweiten Linienrasters (13, 13') unter einem Winkel ungleich 0° zu den Linien des ersten Linienrasters (14, 14') verlaufen, wobei die Linien des dritten Linienrasters (15, 15') unter einem Winkel ungleich 0° zu den Linien des ersten Linienrasters (14, 14') und zu den Linien des zweiten Linienrasters (13, 13') verlaufen, wobei die Kamera eine zweite Abbildung des zweiten Linienrasters (13, 13') und eine dritte Abbildung des dritten Linienrasters (15, 15') durch das Objekt (10) erfasst und die Recheneinheit derart eingerichtet ist, dass sie anschließend anhand der zweiten Abbildung und der dritten Abbildung jeweils den Linienabstand der jeweiligen Abbildung quer zu den Linien des jeweiligen Linienrasters bestimmt, wobei die Recheneinheit derart eingerichtet ist, dass sie basierend auf den erhaltenen Linienabständen unter Berücksichtigung der Drehung der Linien bezogen auf das jeweilige Linienraster (13, 13', 14, 14', 15, 15') die Brechkraft in jede azimutale Richtung an dem mindestens einen vorbestimmten Volumenelement (11, 11.1, 11.2, 11.3) des Objekts (10) berechnet, wobei die Vorrichtung derart eingerichtet ist, dass die Erfassung der ersten, zweiten und dritten Abbildung nacheinander oder gleichzeitig erfolgt, wobei bei der gleichzeitigen Erfassung der Abbildungen die erste, zweite und dritte Abbildung durch Beleuchtung der Linienraster mit Licht unterschiedlicher Wellenlänge erzeugbar ist und die Kamera derart ausgebildet ist, dass sie die unterschiedlichen Wellenlängenbereiche separat erfasst.

7. Vorrichtung nach Anspruch 6, **dadurch gekennzeichnet, dass** das erste Linienraster (14, 14') und/oder das zweite Linienraster (13, 13') und/oder das dritte Linienraster (15, 15') parallel zueinander verlaufen oder in einer gemeinsamen Ebene angeordnet sind.

8. Vorrichtung nach einem der Ansprüche 6 bis 7, **dadurch gekennzeichnet, dass** die Kamera als eine Matrix- oder eine Zeilenkamera ausgebildet ist und dass die Vorrichtung vorzugsweise für jedes Linienraster des ersten Linienrasters (14, 14') des zweiten Linienrasters (13, 13') und des dritten Linienrasters (15, 15') eine separate Kamera (16) aufweist.

9. Vorrichtung nach einem der Ansprüche 6 bis 8, **dadurch gekennzeichnet, dass** die Vorrichtung eine Leuchtwand mit einer Matrix aus Lichtquellen-Elementen aufweist, welche vorzugsweise als LED oder OLED ausgebildet sind, wobei die Leuchtwand das erste Linienraster (14, 14'), das zweite Linienraster (13, 13') sowie das dritte Linienraster (15, 15') durch Umschalten nacheinander erzeugt.

**Claims**

1. Method for determining the refractive power of a large-area transparent object (10), e.g. a windshield, a visual aid, a cockpit glazing, a helmet glazing or the like, wherein the object is composed of a plurality of volume elements, wherein the behavior of each volume element is approximated in each case by a model of a lens, wherein by means of a camera (16) on at least one predetermined volume element of the object a first image of a first line grid (14, 14') through the object (10) is detected and by means of a computing unit subsequently the line spacing of the first image transverse to the lines of the first line grid is determined on the basis of the first image through the at least one predetermined volume element, wherein by means of the camera additionally a second image of a second line grid (13, 13') and a third image of a third line grid (15, 15') are detected by the object (10), wherein the lines of the second line grid (13, 13') run at an angle unequal to 0° to the lines of the first line grid (14, 14') and the lines of the third line grid (15, 15') run at an angle unequal to 0° to the lines of the first line grid (14, 14') and unequal to 0° to the lines of the second line grid (13, 13'), and by means of the computing unit, on the basis of the second image and the third image, in each case the line spacing of the second image and of the third image transversely to the lines of the respective line grid are subsequently determined, taking into account the rotation of the lines with respect to the respective line grid (13, 13', 14, 14', 15, 15'), wherein on the basis of the line spacings obtained, taking into account the rotation of the lines with respect to the respective line grid (13, 13', 14, 14', 15, 15'), the refractive power in each azimuthal direction at the at least one predetermined volume element of the object (10) is calculated, wherein the detection of the first, second and third images takes place successively or simultaneously, wherein in the simultaneous detection of the images the first, second and third images are produced by illumination of the line grids with light of different wavelengths and the camera detects the different wavelength ranges separately.

2. Method according to one of the preceding claims, **characterized in that** the determination of the line spacing is carried out perpendicularly to the first line grid (14, 14') in the first imaging, perpendicularly to the second line grid (13, 13') in the second imaging and perpendicularly to the third line grid (15, 15') in the third imaging.

3. Method according to one of the preceding claims, **characterized in that** the object (10) is moved successively past the first line grid (14, 14'), the second line grid and the third line grid (15, 15') and the associated camera (16), wherein the first line grid (14, 14') and the second line grid (13, 13') and the third line grid (15, 15') preferably running parallel to one another.

4. Method according to one of the preceding claims, **characterized in that** the first line grid (14, 14'), the second line grid (13, 13') and the third line grid (15, 15') are generated by a light wall with a matrix of light source elements, which are preferably formed as LEDs or OLEDs.

5. Method according to one of the preceding claims, **characterized in that** additionally the inclination of the object (10) to the optical axis of the camera (16) is taken into account.

6. Apparatus for determining the refractive power of a large-area transparent object (10), e.g. a windshield, a visual aid, a cockpit glazing, a helmet glazing or the like wherein the object is composed of a plurality of volume elements, the behavior of each volume element being respectively approximated by a model of a lens, with a camera (16), wherein the device comprising a first line grid (14, 14') and a computing unit, wherein the camera (16) detects the first image of the first line grid (14, 14') through the object (10) at at least one predetermined volume element of the object, wherein the computing unit is configured such that it subsequently determines, on the basis of the first image, the line spacing of the first image transverse to the lines of the first line grid at the respective volume element, wherein the device additionally having a second line grid (13, 13') and a third line grid (15, 15'), the lines of the second line grid (13, 13') running at an angle not equal to 0° to the lines of the first line grid (14, 14'), the lines of the third line grid (15, 15') running at an angle not equal to 0° to the lines of the first line grid (14, 14') and to the lines of the second line grid (13, 13'), the camera capturing a second image of the second line grid (13, 13') and a third image of the third line grid (15, 15') through the object (10), and the computing unit is configured such that it then uses the second image and the third image to determine the line spacing of the respective image transversely to the lines of the respective line grid, wherein the computing unit is configured such that, on the basis of the line spacings obtained, taking into account the rotation of the lines with respect to the respective line grid (13, 13', 14, 14', 15, 15'), it calculates the refractive power in each azimuthal direction at the at least one predetermined volume element (11, 11.1, 11.2, 11.3) of the object (10), wherein the device is configured such that the detection of the first, second and third images takes place successively or simultaneously, wherein, in the case of simultaneous detection of the images, the first, second and third images are producible by illumination of the line grids with light of different wavelengths and the camera is configured such that it detects the different wavelength ranges separately.

7. Apparatus according to claim 6, **characterized in that** the first line grid (14, 14') and/or the second line grid (13, 13') and/or the third line grid (15, 15') run parallel to one another or are arranged in a common plane.

8. Apparatus according to one of claims 6 to 7, **characterized in that** the camera is configured as a matrix camera or a line camera and that the apparatus preferably has a separate camera (16) for each line grid of the first line grid (14, 14'), the second line grid (13, 13') and the third line grid (15, 15').

9. Apparatus according to any one of claims 6 to 8, **characterized in that** the apparatus has a light wall with a matrix of light source elements, which are preferably LEDs or OLEDs, the light wall generating the first line grid (14, 14'), the second line grid (13, 13') and the third line grid (15, 15') one after the other by switching.

**Revendications**

1. Procédé de détermination de la puissance de réfraction d'un objet transparent de grande surface (10), par exemple d'un pare-brise, d'une aide visuelle, d'un vitrage de poste de pilotage, d'un vitrage de casque ou d'éléments analogues, sachant que l'objet est composé d'une pluralité d'éléments volumiques, sachant que le comportement de chaque élément volumique se rapproche respectivement d'un modèle d'une lentille,

sachant qu'au moyen d'une caméra (16), une première image d'une première trame linéaire (14, 14') est saisie par l'objet (10) sur au moins un élément volumique prédéfini de l'objet et la distance linéaire de la première image est déterminée ensuite transversalement par rapport aux lignes de la première trame linéaire au moyen d'une unité de calcul à l'aide de la première image sur au moins un élément volumique prédéfini,

sachant qu'une deuxième image d'une deuxième trame linéaire (13, 13') et une troisième image d'une troisième trame linéaire (15, 15') sont saisies par l'objet (10) en plus au moyen de la caméra, sachant que les lignes de la deuxième trame linéaire (13, 13') passent sous un angle différent de 0° par rapport aux lignes de la première trame linéaire (14, 14') et les lignes de la troisième trame linéaire (15, 15') sous un angle différent de 0° par rapport aux lignes de la première trame linéaire (14, 14') et différent de 0° par rapport aux lignes de la deuxième trame linéaire (13, 13') et la distance linéaire de la deuxième image et de la troisième image est ensuite déterminée transversalement par rapport aux lignes de la trame linéaire respective au moyen de l'unité de calcul à l'aide respectivement de la deuxième image et de la troisième image en tenant compte de la rotation des lignes en se référant à la trame linéaire respective (13, 13', 14, 14', 15, 15'), sachant que la puissance de réfraction dans chaque direction azimutale est calculée sur au moins un élément volumique prédéfini de l'objet (10) sur la base des distances linéaires obtenues en tenant compte de la rotation des lignes en se référant à la trame linéaire respective (13, 13', 14, 14', 15, 15'), sachant que la saisie de la première, de la deuxième et de la troisième image a lieu à la suite ou simultanément, sachant que lors de la saisie simultanée des images, la première, la deuxième et la troisième image sont produites par éclairage des trames linéaires avec de la lumière de longueur d'ondes différente et la caméra saisit séparément les plages de longueurs d'ondes différentes.

2.  Procédé selon la revendication précédente, **caractérisé en ce que** la détermination de la distance linéaire pour la première image a lieu perpendiculairement à la première trame linéaire (14, 14'), pour la deuxième image perpendiculairement à la deuxième trame linéaire (13, 13') et pour la troisième image perpendiculairement à la troisième trame linéaire (15, 15').

3.  Procédé selon l'une quelconque des revendications précédentes, **caractérisé en ce que** l'objet (10) est déplacé passant à la suite sur la première trame linéaire (14, 14'), la deuxième trame linéaire (13, 13') et la troisième trame linéaire (15, 15') et la caméra correspondante (16), sachant que de préférence la première trame linéaire (14, 14'), la deuxième trame linéaire et la troisième trame linéaire (15, 15') passent parallèlement l'une par rapport à l'autre.

4.  Procédé selon l'une quelconque des revendications précédentes, **caractérisé en ce que** la première trame linéaire (14, 14'), la deuxième trame linéaire (13, 13') et la troisième trame linéaire (15, 15') sont produites par une paroi lumineuse avec une matrice composée d'éléments à sources lumineuses, lesquels sont constitués de préférence de diodes électroluminescentes (DEL) ou de diodes électroluminescentes organiques (DELO).

5.  Procédé selon l'une quelconque des revendications précédentes, **caractérisé en ce qu'**en plus l'inclinaison de l'objet (10) est considérée par rapport à l'axe optique de la caméra (16).

6.  Dispositif de détermination de la puissance de réfraction d'un objet transparent de grande surface (10), par ex. un pare-brise, d'une aide visuelle, d'un vitrage de poste de pilotage, d'un vitrage de casque ou d'éléments analogues, sachant que l'objet est composé d'une pluralité d'éléments volumiques, sachant que le comportement de chaque élément volumique se rapproche respectivement d'un modèle d'une lentille, avec une caméra (16),

sachant que le dispositif comporte une première trame linéaire (14, 14') et une unité de calcul, sachant que la caméra (16) saisit la première image de la première trame linéaire (14, 14') par l'objet (10) sur au moins un élément volumique prédéfini de l'objet, sachant que l'unité de calcul est agencée de manière à ce qu'elle détermine ensuite à l'aide de la première image, la distance linéaire de la première image transversalement par rapport aux lignes de la première trame linéaire sur l'élément volumique respectif,

sachant que le dispositif comporte en plus une deuxième trame linéaire (13, 13') et une troisième trame linéaire (15, 15'), sachant que les lignes de la deuxième trame linéaire (13, 13') passent sous un angle différent de 0° par rapport aux lignes de la première trame linéaire (14, 14'), sachant que les lignes de la troisième trame linéaire (15, 15') passent sous un angle différent de 0° par rapport aux lignes de la première trame linéaire (14, 14') et par rapport aux lignes de la deuxième trame linéaire (13, 13'), sachant que la caméra saisit une deuxième image de la deuxième trame linéaire (13, 13') et une troisième image de la troisième trame linéaire (15, 15') par l'objet (10) et l'unité de calcul est agencée de manière à ce qu'elle détermine ensuite à l'aide de la deuxième image et de la troisième image respectivement la distance linéaire de l'image respective transversalement par rapport aux lignes de la trame linéaire respective, sachant que l'unité de calcul est agencée de manière à ce qu'elle calcule la puissance de réfraction dans chaque direction azimutale sur au moins un élément volumique prédéfini (11, 11.1, 11.2, 11.3) de l'objet (10) en se basant sur les distances linéaires obtenues en tenant compte de la rotation des lignes se référant à la trame linéaire respective (13, 13', 14, 14', 15, 15'), sachant que le dispositif est agencé de manière à ce que la saisie de la première, de la deuxième et de la troisième image ait lieu à la suite ou simultanément, sachant que lors de la saisie simultanée des images, la première, la deuxième et la troisième image peuvent être produites en éclairant les trames linéaires avec de la lumière de longueur d'ondes différente et la caméra est constituée de manière à ce qu'elle saisisse séparément les plages de longueurs d'ondes différentes.

**7.** Dispositif selon la revendication 6, **caractérisé en ce que** la première trame linéaire (14, 14') et/ou la deuxième trame linéaire (13, 13') et/ou la troisième trame linéaire (15, 15') passent parallèlement l'une par rapport à l'autre ou sont disposées dans un plan commun.

**8.** Dispositif selon l'une quelconque des revendications 6 à 7, **caractérisé en ce que** la caméra est constituée sous la forme d'une caméra matricielle ou d'une caméra linéaire et **en ce que** le dispositif comporte de préférence une caméra séparée (16) pour chaque trame linéaire de la première trame linéaire (14, 14'), de la deuxième trame linéaire (13, 13') et de la troisième trame linéaire (15, 15').

**9.** Dispositif selon l'une quelconque des revendications 6 à 8, **caractérisé en ce que** le dispositif comporte une paroi lumineuse avec une matrice composée d'éléments à sources lumineuses, lesquels sont formés de préférence de diodes électroluminescentes (DEL) ou de diodes électroluminescentes organiques (DELO), sachant que la paroi lumineuse produit à la suite par commutation, la première trame linéaire (14, 14'), la deuxième trame linéaire (13, 13') ainsi que la troisième trame linéaire (15, 15').

Fig.2

Fig. 3

Fig. 1

Fig.4

Fig.5

Fig. 6

Fig.7

Fig. 6a

Fig.8

Fig.9

Fig.10

Fig.11

Fig.12

Fig.13

Fig.14

Fig. 15

Fig.16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011187855 A1